**Europäisches Patentamt**

**European Patent Office**

**Office européen des brevets**

(19)

(11) Numéro de publication: **0 034 971**

**A1**

(12)

# DEMANDE DE BREVET EUROPEEN

(21) Numéro de dépôt: **81400223.4**

(22) Date de dépôt: **13.02.81**

(51) Int. Cl.³: **G 05 D 23/19**

(30) Priorité: **19.02.80 FR 8003559**

(43) Date de publication de la demande:
**02.09.81 Bulletin 81/35**

(84) Etats contractants désignés:
**BE DE GB IT**

(71) Demandeur: **FINIMETAL, Société dite**
**25, Rue de Clichy**
**F-75009 Paris(FR)**

(72) Inventeur: **Besson, Jean-Louis**
**5, rue Pierre Curie Vielaines**
**F-10800 Saint-Julien-Les-Villas(FR)**

(74) Mandataire: **Polus, Camille et al,**
**c/o Cabinet Lavoix 2, Place d'Estienne d'Orves**
**F-75441 Paris Cedex 09(FR)**

(54) Dispositif de programmation à distance d'une installation de chauffage central.

(57) Ce dispositif destiné notamment à commander le fonctionnement d'une installation équipée de convecteurs électriques auxquels sont associés des thermostats à commande automatique de la température de consigne comporte une horloge (9) à cycle prédéterminé émettant des signaux de commande à au moins deux régimes de fonctionnement des thermostats pendant des intervalles de temps dudit cycle, des circuits logiques (7a à 7h) de programmation de la température de fonctionnement des thermostats dans des zones correspondantes de l'installation en fonction de l'évolution des signaux de l'horloge (9), un circuit (1) de mesure de l'intensité au niveau du disjoncteur général et des moyens (2,3,4) de commande du délestage et du relestage successifs des convecteurs en fonction de l'intensité mesurée.

EP 0 034 971 A1

./...

FIG.1

1

Dispositif de programmation à distance d'une
installation de chauffage central.-

La présente invention est relative aux installations de chauffage et se rapporte plus particulièrement à des installations de chauffage central dont les radiateurs sont munis de thermostats.

On connaît des installations de chauffage central qui comportent outre un thermostat central de commande du régime de la chaudière, des thermostats supplémentaires associés à chaque radiateur ou à un radiateur de chacune des pièces du local à chauffer et qui est destiné à permettre le réglage de la température à une valeur désirée.

De telles installations, bien qu'elles constituent un progrès considérable vis à vis des installations sans thermostat, présentent un certain nombre d'inconvénients.

L'action sur le thermostat central n'est pas sélective car elle modifie en bloc la plage de fonctionnement de la chaudière sans tenir compte du fait que la variation de température dans les diverses pièces à chauffer ne doit pas nécessairement être la même.

L'action sur les thermostats individuels, associés aux radiateurs assouplit l'utilisation du thermostat central.

Cependant, pour modifier la température de toutes les pièces d'un appartement, l'utilisateur doit répéter l'opération de réglage autant de fois que l'installation comporte de radiateur.

Cette opération devient fastidieuse lorsqu'il y a lieu de l'effectuer plusieurs fois au cours d'une même journée, dans le but, par exemple, d'éviter de trop chauffer son logement pendant les heures de la journée auxquelles les occupants du logement sont absents.

Par ailleurs, dans des logements qui restent inoccupés durant des périodes prolongées, par exemple, dans des résidences secondaires où l'on souhaite maintenir une température minimale, mais suffisante pour éviter le gel des canalisations, il est fortement souhaitable de disposer d'un moyen simple qui permette de placer l'installa-

2

tion de chauffage dans un état tel qu'elle fournisse la quantité de chaleur juste suffisante pour que la température dans le logement s'établisse à un minimum prédéterminé.

Dans les installations récentes, l'utilisation des thermostats électroniques est de plus en plus répandue.

La Demanderesse a mis au point un thermostat électronique d'un type particulier, dont la caractéristique essentielle est qu'il peut être commandé à distance par des signaux impulsionnels tirés par exemple du secteur.

Un tel thermostat est décrit dans la demande de brevet déposée ce jour par la Demanderesse et intitulée " Thermostat électronique perfectionné ".

Ce thermostat comprenant des moyens de commande automatique du réglage de la température de consigne, se prête particulièrement bien à la commande à distance.

L'invention vise donc à créer un dispositif de programmation à distance d'une installation de chauffage central comprenant des radiateurs auxquels sont associés des thermostats à commande automatique de la température de consigne qui permette de fixer de façon simple et en un très petit nombre de manipulations le régime de fonctionnement de chaque radiateur.

L'invention vise également à créer un tel dispositif de programmation pour installation à convecteurs électriques qui permette d'assurer un délestage de l'installation en cas de surcharge et un relestage dès que la surcharge disparaît.

Elle a donc pour objet un dispositif de programmation à distance d'une installation de chauffage central comprenant des radiateurs auxquels sont associés des thermostats à commande automatique de la température de

0034971

3

consigne, caractérisé en ce qu'il comporte une horloge à cycle prédéterminé destinée à émettre des signaux de commande à au moins deux régimes de fonctionnement des thermostats pendant des intervalles de temps prédéterminés dudit cycle et au moins un circuit logique de programmation de la température de fonctionnement des thermostats en fonction de l'évolution des signaux de commande délivrés par ladite horloge.

D'autres caractéristiques de l'invention apparaîtront au cours de la description qui va suivre.

Aux dessins annexés, donnés uniquement à titre d'exemple :

- la Fig.1 est un schéma synoptique du programmateur pour l'installation de chauffage à convecteurs électriques suivant l'invention;

- la Fig.2 est un schéma électrique détaillé du dispositif de mesure d'intensité qui fait partie du programmateur de la Fig.1;

- la Fig.2a montre une variante d'un détail du circuit de la Fig.2;

- la Fig.3 est un schéma électrique du circuit de remise à zéro lors de la mise sous tension de l'installation;

- la Fig.4 est un schéma électrique du registre à décalage bidirectionnel du programmateur de la Fig.1;

- la Fig.5 est un schéma électrique du circuit d'alimentation et d'horloge à 50 Hz entrant dans la construction du programmateur de l'invention;

- la Fig.6 est un schéma d'une horloge de programmation;

- la Fig.7 est un schéma électrique du circuit d'horloge de délestage et de relestage;

- la Fig.8 est un circuit logique de commande du registre de la Fig.4;

- la Fig.9 est un schéma d'un circuit logique de programmation de zone entrant dans la construction du

4

programmateur suivant l'invention; et

      - la Fig.10 est un schéma électrique du circuit de commande " Hors-gel " du programmateur suivant l'invention.

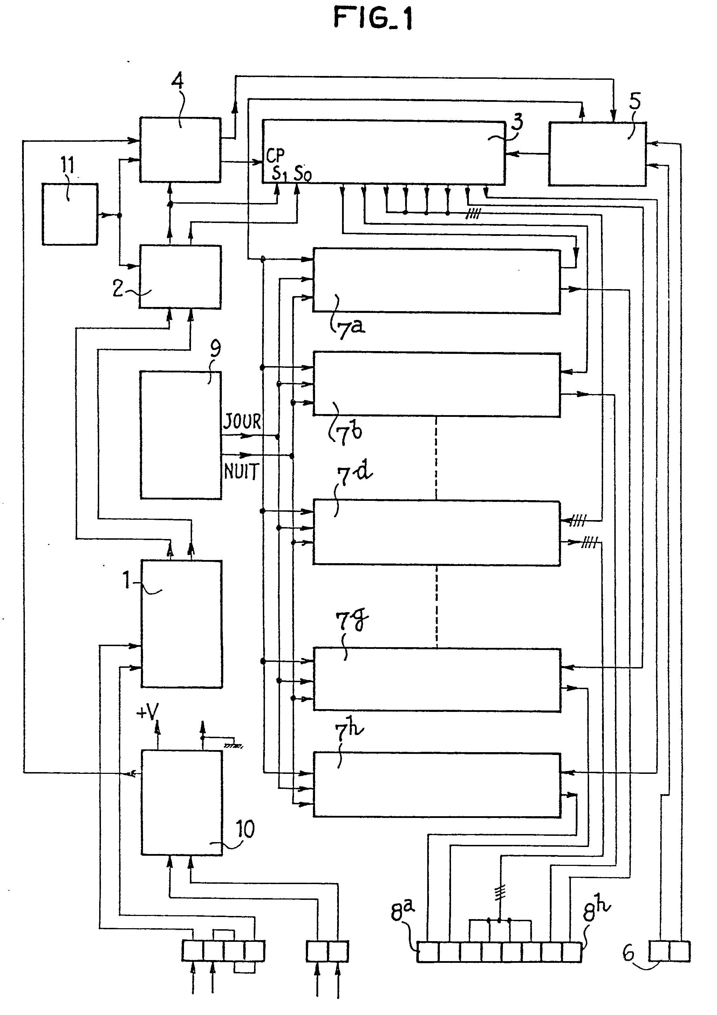

      Le programmateur représenté à la Fig.1 sous forme de schéma synoptique comporte un circuit 1 de mesure de l'intensité du courant débité par l'installation et de commande du délestage et de relestage de celle-ci.

      Le circuit 1 est connecté à un circuit logique 2 dont une sortie est connectée à une première entrée So d'un registre à décalage bidirectionnel 3.

      Une autre sortie du circuit logique 2 est connectée à une entrée $S_1$ du registre 3 ainsi qu'à une entrée d'un circuit 4 d'horloge de délestage et relestage.

      Une sortie de ce circuit 4 est connectée à une entrée CP du registre 3, tandis qu'une autre de ses sorties est connectée à un circuit 5 de commande " Hors-gel " dont le rôle sera expliqué par la suite.

      Le circuit 5 de commande " Hors-gel " qui est connecté à un commutateur 6 de commande à distance comporte une sortie connectée à une entrée du registre à décalage 3 et une sortie qui est connectée à des entrées correspondantes de circuitslogiquesde programmation 7a à 7h destinés à la programmation de la température d'un nombre correspondant de zonesdont il y a lieu de régler le chauffage.

      Chacun des circuits logiques de programmation comporte en outre une entrée connectée à une sortie correspondante du registre à décalage 3.

      Les circuits logiques de programmation 7a à 7h sont interconnectés entre eux de manière à pouvoir être commutés d'un régime de fonctionnement de jour à un régime de fonctionnement de nuit et inversement.

      Enfin, chacun des circuits logiques 7a à 7h comporte une sortie par laquelle il est connecté à une borne de sortie 8a à 8h correspondante au moyen de laquelle

5

il est destiné à être connecté à un thermostat non représenté, associé à un convecteur placé dans une zone dont il s'agit d'assurer le chauffage.

Aux entrées de commutation entre le régime de jour et le régime de nuit des circuits logiques de programmation 7a à 7h est connectée une horloge de programmation 9 qui sera décrite par la suite.

Le circuit représenté à la Fig.1 comporte un circuit 10 d'alimentation et de mise en forme d'un signal à la fréquence du secteur destiné à commander l'horloge 4 de relestage et de délestage ainsi qu'un circuit 11 de remise à zéro lors de la mise sous tension dont la sortie est connectée aux entrées de remise à zéro des circuits 2 et 4.

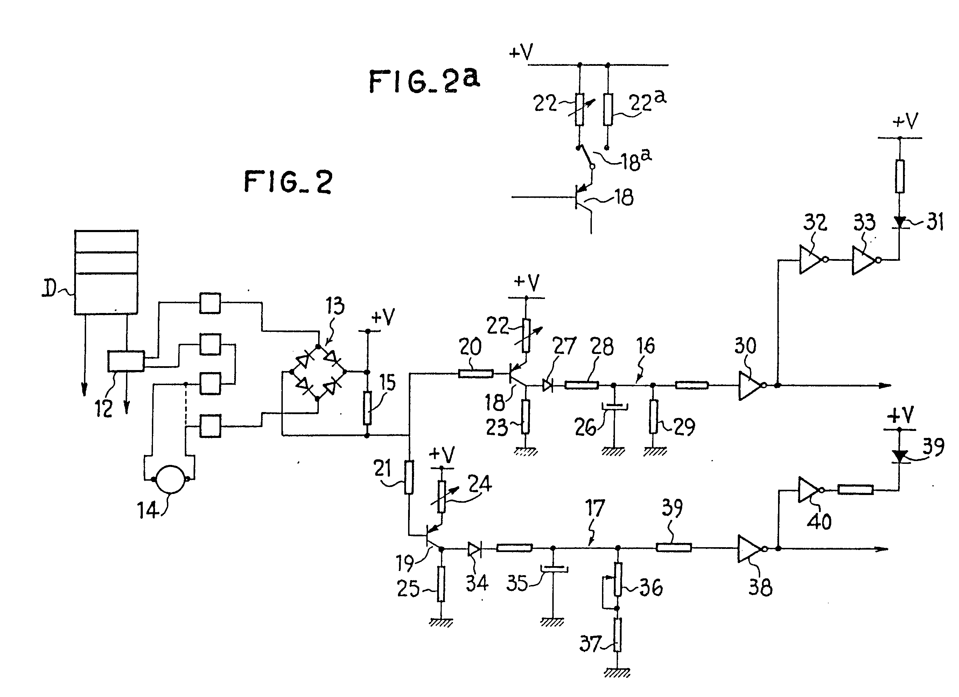

Le circuit 1 de mesure de l'intensité est représenté en détail à la Fig.2.

Ce circuit mesurant l'intensité à la sortie du disjoncteur D du secteur d'alimentation de l'installation comprend un transformateur d'intensité 12 connecté aux bornes d'un pont redresseur 13 à double alternance, un ampéremètre 14 pouvant être intercalé en série entre la sortie du transformateur d'intensité 12 et le pont 13. Aux bornes de sortie du pont 13 est connectée une résistance 15 dont une des bornes est connectée à l'entrée de deux amplificateurs indépendants 16 et 17 à gain réglable constitués respectivement d'un transistor 18, 19 dont la base est connectée à la résistance 15 par l'intermédiaire d'une résistance 20, 21.

L'émetteur du transistor 18 est connecté à la tension d'alimentation de + 12 volts par l'intermédiaire d'une résistance variable 22, tandis que son collecteur est connecté à la masse par l'intermédiaire d'une résistance 23.

De la même manière, l'émetteur du transistor 19 est connecté à la tension d'alimentation par l'intermédiaire d'une résistance variable 24 tandis que son

6

collecteur est connecté à la masse par l'intermédiaire d'une résistance 25.

Le collecteur du transistor 18 est en outre connecté à une borne d'un condensateur 26 et par l'intermédiaire d'une diode 27 et d'une résistance 28 en série. Le condensateur de filtrage 26 est connecté à la masse en parallèle avec une résistance 29 et sa borne opposée à la masse est connectée à un basculeur de Schmitt 30 de détection du niveau de délestage de l'installation. La sortie du basculeur 30 constitue la sortie de commande de délestage et elle est en outre connectée à une diode électroluminescente 31 commandée par des circuits intégrés 32 et 33 et destinée à signaler le seuil de délestage de l'installation pour faciliter le réglage de ce seuil.

Selon la variante de la Fig.2a, le potentiomètre 22 est connecté à un contact fixe d'un commutateur 18a à deux positions destiné à être commandé à distance par des signaux provenant du réseau, le contact mobile du commutateur étant connecté à l'émetteur du transistor 18. Une résistance fixe 22a d'établissement d'un seuil de délestage inférieur au seuil de délestage réglé par le potentiomètre 22 est connectée entre la tension d'alimentation continue et l'autre contact fixe du commutateur 18a.

On dispose ainsi de la possibilité d'assurer une commande à distance du seuil de délestage de l'installation. L'administration qui fournit l'électricité peut ainsi en cas d'excès de consommation dans un secteur déterminé envoyer un signal de commande de délestage momentané.

La voie ainsi formée constitue une voie de réglage du niveau de délestage. D'une manière analogue, une voie de réglage du niveau de relestage comporte outre le transistor 19, une diode 34 au moyen de laquelle le collecteur du transistor 19 est connecté à une borne d'un condensateur de mémorisation 35 dont l'autre borne est connectée à la masse en parallèle avec un potentiomètre 36 et une résistance 37 en série assurant le réglage de la mémorisation de l'intensité de crête. Un basculeur de Schmitt 38, connecté à la borne du condensateur 35 opposée à la masse assure selon son niveau de sortie l'ordre de relestage ou non. L'état de la voie de réglage du niveau de relestage est signalé par une diode électroluminescente 39 connectée à la sortie du basculeur 38 en série avec un circuit intégré 40.

Les couleurs des diodes électroluminescentes 31 et 39 sont différentes de façon à indiquer clairement la situation en délestage ou en relestage de l'installation.

Le circuit qui vient d'être décrit est un circuit associé à une alimentation monophasée. On comprendra cependant qu'il est aisé de concevoir un circuit analogue pour une alimentation triphasée, auquel cas il convient d'associer un transformateur d'intensité ainsi qu'un pont redresseur à chaque phase et de connecter ensemble les sorties des ponts redresseurs, l'intensité prise en compte étant celle de la phase dont la valeur est la plus élevée.

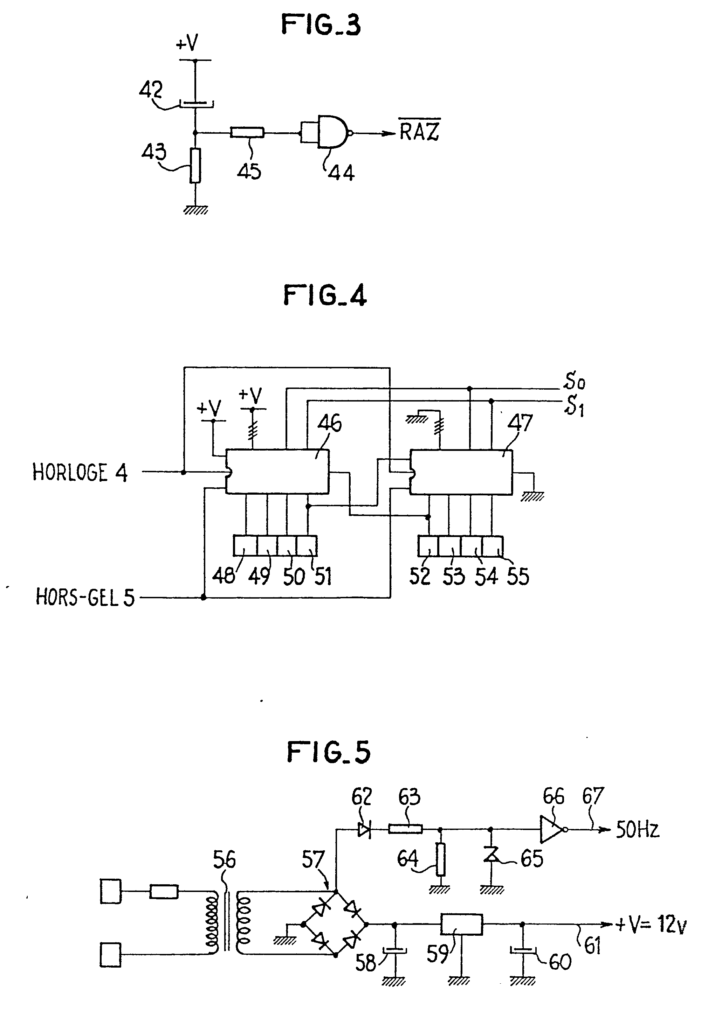

Sur le Fig.3, on a représenté le schéma du circuit de remise à zéro du circuit d'horloge 4 et du circuit logique 2 de commande des registres lors de la mise sous tension de l'installation. Ce circuit comporte principalement un condensateur 42 connecté entre l'alimentation continue et la masse en série avec une résistance 43. Ces

8

deux composants présentent une constante de temps RC et leur point de jonction est connecté à un basculeur de Schmitt 44 par l'intermédiaire d'une résistance 45. La sortie du basculeur de Schmitt 44 est connecté aux entrées de remise à zéro du circuit logique 2 et du circuit d'horloge 4 (Fig.1).

Sur la Fig.4, on a représenté plus en détail le registre à décalage bidirectionnel 3 qui fait partie du programmateur délesteur de la Fig.1.

Dans le mode de réalisation représenté, ce registre est constitué de deux registres à quatre bits 46 et 47 connectés chacun en parallèle au circuit de commande Hors-gel 5, les entrées So et S1 du registre 3 étant des entrées communes des deux registres 46 et 47. Chacun des registres comporte quatre sorties 48 à 51 et 52 à 55 respectivement.

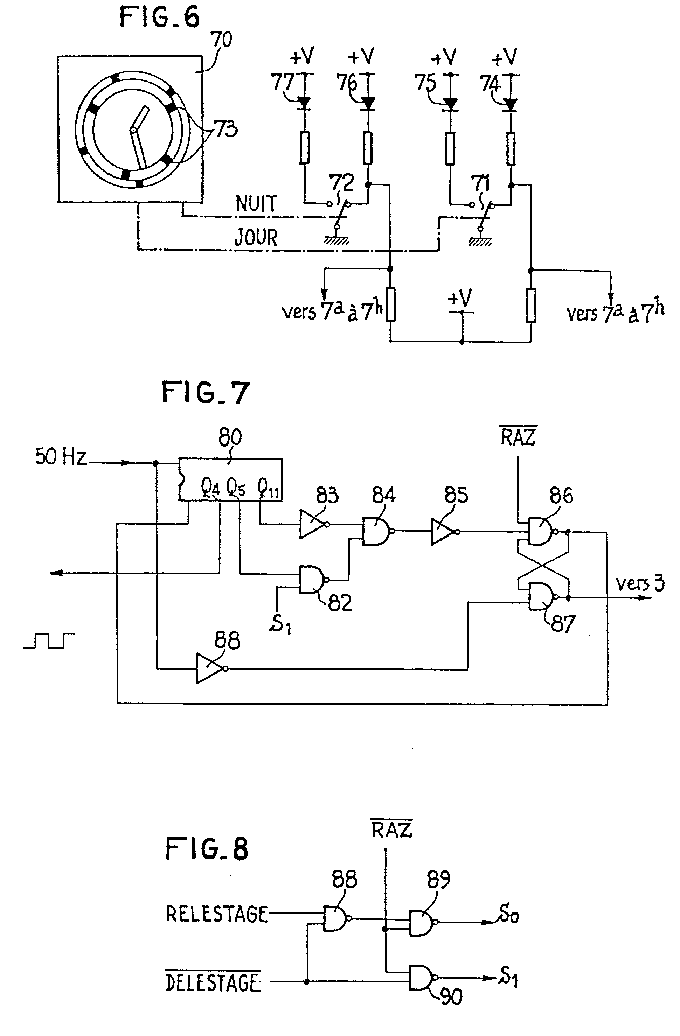

Le circuit 10 d'alimentation et de mise en forme de signaux du secteur est représenté à la Fig.5.

Ce circuit comporte un transformateur abaisseur de tension 56 aux bornes du secondaire duquel est connecté un pont redresseur à double alternance 57, à la sortie duquel est connecté un condensateur de filtrage 58, un circuit régulateur de tension 59 étant connecté entre le point de jonction du redresseur 57 et du condensateur 58 et un autre condensateur 60. La sortie 61 de cette première partie du circuit de la Fig.5 constitue la sortie qui fournit la tension continue d'alimentation à l'ensemble du circuit.

Le circuit de la Fig.5 comporte en outre une partie de mise en forme des signaux du secteur pour constituer une horloge à la fréquence dudit secteur, à 50 Hz dans le présent exemple. Ce circuit comprend une diode 62 connectée à un point de jonction du pont 57 et du secondaire du transformateur 56, la cathode de cette diode étant connectée à un pont diviseur formé de résistances 63 et 64. Une diode Zener 65 est connectée en parallèle sur la résistance 64 et le point de jonction de cette dernière et de la diode Zener opposé à la masse est connecté à l'entrée d'un circuit intégré 66 de mise en forme du signal constitué par l'alternance du secteur que laisse passer la diode 62 et qui est ensuite décrêtée par la diode Zener 65. La sortie 67 du circuit 66 constitue la sortie d'alimentation en signaux d'horloge à 50 Hz de l'ensemble de l'installation.

Sur la Fig.6, on a représenté une horloge de programmation à deux zones qui porte le numéro de référence 9 sur le schéma de la Fig.1.

L'horloge de programmation 9 comporte une horloge à Quartz 70 proprement dite qui est connectée de manière à piloter deux inverseurs 71 et 72 suivant une programmation effectuée par des cavaliers 73 positionnés sur la face avant de l'horloge. La première zone est affectée à la programmation de l'ensemble des convecteurs (non représentés) des locaux utilisés habituellement le jour, alors que la seconde zone est affectée à la programmation de l'ensemble des convecteurs (non représentés) des locaux utilisés habituellement la nuit.

L'état de chaque inverseur 71, 72 est visualisé par des diodes électroluminescentes 74, 75 et 76,77 qui indiquent le régime de fonctionnement de l'installation.

10

Le schéma du circuit d'horloge de délestage et de relestage de la Fig.1 est représenté en détail à la Fig.7.

Ce circuit comporte principalement un compteur binaire 80 à quatorze étages à l'entrée duquel est appliqué le signal d'horloge provenant du circuit 4. Une première sortie Q4 de ce compteur est une sortie de signaux d'horloge destinée à commander le clignotement des voyants se trouvant dans les circuits logiques 7a à 7h de programmation de chacune des zones et sur lesquels on reviendra par la suite.

Une deuxième sortie Q5 du compteur 80 est connectée à une entrée d'une porte NON-ET 82 dont une autre entrée est connectée à la sortie du circuit logique 2 de la Fig.1. Une dernière sortie Q11 du compteur 80 est connectée par l'intermédiaire d'un inverseur 83 à une entrée d'une porte NON-ET 84 dont l'autre entrée est connectée à la sortie de la porte 82 et dont la sortie est connectée par l'intermédiaire d'un inverseur 85 à une porte NON-ET à trois entrées 86 dont une seconde entrée est connectée à un signal $\overline{RAZ}$ provenant du circuit 11 (Fig.1), par l'intermédiaire d'un inverseur (non représenté) et dont une troisième entrée est connectée à la sortie d'une porte NON-ET à deux entrées 87 dont une entrée est connectée à l'entrée d'horloge du compteur 80 par l'intermédiaire d'un inverseur 88 et dont une autre entrée est connectée à la sortie de la porte 86 qui est également connectée à l'entrée de remise à zéro du compteur 80. La sortie de la porte NON-ET 87 constitue la sortie du circuit 4 qui délivre des signaux d'horloge pour le registre à décalage bidirectionnel 3.

Le circuit logique 2 de commande du registre à décalage 3 est représenté à la Fig.8; il comprend une porte NON-ET 88 à deux entrées dont une entrée est connectée à la sortie de relestage du circuit de mesure d'intensité 1 et dont l'autre entrée est connectée à la sortie

11

délivrant un signal complémentaire du signal délestage de ce même circuit 1. La sortie de la porte 88 est connectée à une entrée d'une autre porte NON-ET 89 tandis que l'entrée de la porte 88 connectée à la sortie $\overline{\text{délestage}}$ du circuit 1 est en outre connectée à une entrée d'une porte NON-ET 90 à deux entrées. Les autres entrées des portes 89 et 90 sont connectées à la sortie du circuit 11 de remise à zéro lors de la mise sous tension. Les sorties des portes 89 et 90 sont respectivement connectées aux entrées So et S1 du registre à décalage bidirectionnel 3.

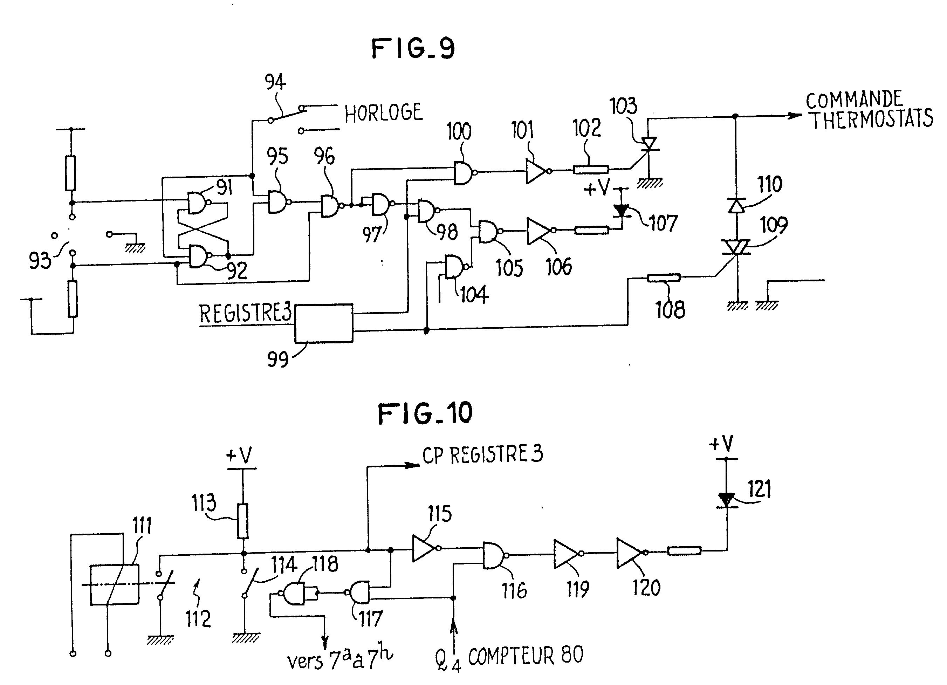

Les circuits logiques de programmation 7a à 7h sont indentiques et un exemple d'un tel circuit est représenté à la Fig.9.

Il comprend principalement une bascule constituée par deux portes NON-ET 91 et 92 pilotées à partir d'un inverseur à trois positions 93. Les trois positions de l'inverseur correspondent respectivement à trois régimes de fonctionnement de la zone qui doit être commandée par le circuit logique de programmation. Ces régimes sont le régime confort, le régime automatique et le régime réduit. La porte 91 est une porte à deux entrées, dont une première entrée est connectée à la borne fixe "confort" de l'inverseur 93 et dont l'autre entrée est connectée à la sortie de la porte NON-ET 92. Cette dernière est une porte à trois entrées. Une entrée de celle-ci est connectée au contact fixe "réduit" de l'inverseur 93, une seconde entrée est connectée à la sortie de la porte 91 et une troisième entrée est connectée à un commutateur 94 de signaux d'horloge qui proviennent de l'horloge de programmation à deux zones 9 de la Fig.1.

La sortie de la porte NON-ET 92 constitue la sortie de la bascule et elle est connectée à une entrée d'une porte NON-ET 95 dont l'autre entrée est connectée au commutateur 94 et dont la sortie est connectée à une porte NON-ET 96 dont une autre entrée est connectée au

12

contact fixe "réduit" de l'inverseur 93. La sortie de la porte 96 est connectée à une porte NON-ET 97 connectée en inverseur et dont la sortie est connectée à une entrée d'une porte NON-ET 98 à deux entrées dont l'autre entrée est reliée à la sortie Q d'un circuit tampon 99 à sorties complémentées connecté à la sortie de zone correspondante du registre à décalage 3 du programmateur de la Fig.1. La sortie Q du circuit 99 est en outre connectée à une entrée d'une porte NON-ET 100 dont l'autre entrée est connectée à la sortie de la porte NON-ET 96 et dont la sortie est reliée par l'intermédiaire d'un inverseur 101 et d'une résistance 102 à l'électrode de commande d'un thyristor 103 connecté dans le circuit de commande d'un ou de plusieurs thermostats associés aux convecteurs destinés à chauffer la zone considérée. La sortie $\overline{Q}$ du circuit 99 est connectée à une entrée d'une porte NON-ET 104 dont l'autre entrée est connectée à la sortie d'horloge et de voyant du circuit de commande Hors-gel 15 du programmateur de la Fig.1. La sortie de la porte 104 est connectée à une entrée de la porte NON-ET 105 dont l'autre entrée est connectée à la sortie de la porte 98.

La sortie de la porte 105 est connectée par l'intermédiaire d'un inverseur 106 à une diode électroluminescente 107 d'indication du régime de fonctionnement de la zone. La sortie $\overline{Q}$ du circuit 99 est en outre connectée par l'intermédiaire d'une résistance 108 à l'électrode de commande d'un triac 109 également destiné à la commande des thermostats de la zone considérée et connecté entre l'anode du thyristor 103 et la masse par l'intermédiare d'une diode 110.

Le circuit de commande "Hors-gel" 5 de la Fig.1 est représenté plus en détail à la Fig.10. Il comporte principalement un relais 111 dont le bobinage est connecté au commutateur 6 de commande à distance de la Fig.1. Le relais 111 commande un interrupteur 112 dont le contact mobile est relié à la masse et dont le contact fixe est connecté à la tension d'alimentation continue par l'intermédiaire d'une résistance 113. Un interrupteur 114

13

assure la connexion de la résistance 113 à la masse. La borne de la résistance 113 connectée à l'interrupteur 112 est reliée par l'intermédiaire d'un inverseur 115 à une entrée d'une porte NON-ET 116 dont une autre entrée est reliée à la sortie Q4 du compteur binaire 80 du circuit d'horloge de délestage et de relestage représenté à la Fig.7. Cette entrée de la porte 116 est en outre connectée à une entrée d'une porte NON-ET 117 dont l'autre entrée est connectée à l'interrupteur 112 et dont la sortie est connectée par l'intermédiaire d'une porte NON-ET 118 montée en inverseur aux entrées respectives des circuits logiques de programmation 7a à 7h du programmateur de la Fig.1.

La sortie de la porte NON-ET 116 est connectée par l'intermédiaire de deux inverseurs 119 et 120 à une diode électroluminescente de signalisation de la position " Hors-gel".

L'ensemble des circuits qui viennent d'être décrits est contenu dans un boîtier disposé à un emplacement approprié du local dont il y a lieu de programmer le chauffage.

Le fonctionnement du programmateur de l'invention va maintenant être décrit en se référant principa- lement à la Fig.1 et en se reportant en cas de besoin aux schémas détaillés des autres figures.

Dans le mode de réalisation décrit et représenté, le programmateur de l'invention permet de commander huit zones différentes et comporte à cet effet huit circuits logiques de programmation 7a à 7h. L'horloge de programmation à deux zones 9 dont le schéma est représenté en détail à la Fig.6 est une horloge d'un cycle de 24 heures qui permet de programmer au moyen du positionnement des cavaliers 73, le passage alternatif à deux états " confort " et " réduit ". La zone annulaire extérieure de l'horloge 70 est affectée par exemple à la programmation de l'ensemble des convecteurs des locaux utilisés habituellement

14

le jour. La zone intérieure est destinée à la programmation de l'ensemble des convecteurs des locaux utilisés habituellement la nuit. L'état de chacun des inverseurs 71 et 72 est visualisé par l'éclairement de l'une des diodes électroluminescentes correspondantes 74, 75 ou 76, 77 qui indiquent respectivement que les inverseurs se trouvent dans la position " confort " ou dans la position " réduit ". Les signaux de sortie correspondant à ces états apparaissent sur les sorties " jour " ou " nuit " du circuit 9 de la Fig.1 et sont appliqués aux circuits logiques de programmation 7a à 7h correspondants, préréglés par leurs commutateurs 94 respectifs.

Si l'on considère le circuit représenté à la Fig.9, les signaux de l'horloge de programmation 70 sont appliqués au contact fixe du commutateur 94 qui selon sa position accepte les signaux d'horloge de jour ou de nuit. On conçoit qu'ainsi chacun des circuits logiques de programmation 7a à 7h est sélectionné pour un fonctionnement de jour ou de nuit selon la zone qu'il est chargé de desservir.

Le commutateur à trois positions 93 de chacun des circuits logiques de programmation 7a à 7h est en outre placé dans la position "confort" "automatique" ou "réduit" correspondant au régime auquel on souhaite que la zone correspondante soit programmée.

Au cours du fonctionnement de l'installation, le circuit de mesure d'intensité 1 contrôle à chaque instant, l'intensité du courant débité par le secteur tant vers l'installation de chauffage qui doit être commandée par le programmateur de l'invention que vers les autres appareils de l'installation électrique des locaux dans lesquels le programmateur est installé.

Le transformateur d'intensité 12 débite un courant proportionnel au courant provenant du disjoncteur général. Le transformateur 12 engendre dans la résistance 15, une tension proportionnelle à l'intensité consommée,

15

cette intensité étant éventuellement mesurée par l'ampére-mètre 14. La tension aux bornes de la résistance 15 est redressée par le pont 13 pour être appliquée aux deux amplificateurs 16 et 17. La tension amplifiée par le transistor 18 de l'amplificateur 16 est filtrée par le condensateur 26 et appliquée au basculeur 30 dont le seuil est réglé au niveau de délestage de l'installation, de sorte que lorsqu'un signal logique 0 apparaît à la sortie de ce circuit, il correspond à l'ordre de délestage. Simultanément, la diode électroluminescente 31 signale l'état de délestage de l'installation en s'allumant.

L'ordre de délestage apparaissant à la sortie du basculeur 30 est transmis au circuit logique 2 de commande du registre à décalage 3. Dans le circuit destiné à la détection du seuil de relestage, le condensateur 35 mémorise momentanément l'intentité de crête du courant délivré par le transistor 19. La durée de cette mémorisation est réglée au moyen du potentiomètre 36 qui adapte la constante de temps de décharge du condensateur 35. Selon les seuils de réglage du circuit basculeur 38, on obtient à sa sortie un signal logique 0 ou 1 correspondant à la tension d'alimentation continue, douze volts dans le présent exemple et donnant l'ordre de relestage ou non. Le signal de sortie du basculeur 38 est appliqué lui aussi au circuit logique 2, tandis que l'état de relestage dans lequel se trouve l'installation est indiqué par l'allumage de la diode électroluminescente 39.

Les signaux de délestage et de relestage sont traités dans le circuit logique 2 de commande de registre représenté à la Fig.8. La porte NON-ET 88 reçoit à ses entrées des signaux relestage et $\overline{\text{délestage}}$ .

On envisage alors quatre situations.

a) lors de la mise sous tension de l'installation, le signal de sortie $\overline{\text{RAZ}}$ du circuit 11 passe momentanément au niveau 0 de sorte que des signaux logiques 0 sont appliqués aux entrées correspondantes des por-

16

tes 89 et 90 dont les sorties passent au niveau logique
1 quel que soit le niveau logique de leurs autres entrées.

Ainsi les entrées So et S1 du registre à
décalage bidirectionnel passent au niveau 1 et ce registre
se trouve placé en mode de chargement en parallèle. En se
référant au circuit de la Fig.3, on constate que la sortie
$\overline{RAZ}$ est au niveau 0 pendant la charge du condensateur 42
pendant laquelle le courant circulant dans la résistance
43 diminue, de sorte qu'à la fin d'un intervalle de temps
correspondant à la constante de temps RC du circuit constitué par le condensateur 42 et la résistance 43, le signal appliqué au basculeur 44 passe au niveau logique 0
et sa sortie passe au niveau logique 1, de sorte que les
portes 89 et 90 du circuit de la Fig.8 reçoivent alors
sur leurs entrées correspondantes, des niveaux logiques 1
et se comportent dans ces conditions chacune comme un
inverseur.

b) lorsque le circuit logique reçoit du
circuit de mesure d'intensité, un signal de commande de
relestage qui correspont à une situation dans laquelle
l'intensité mesurée est inférieure à l'intensité de fonctionnement du disjoncteur, la porte 88 reçoit un signal
relestage à un niveau logique 1, tandis que le signal
$\overline{délestage}$ appliqué à l'autre entrée de la porte 88 ainsi
qu'à l'entrée de la porte 90, se trouve également au niveau logique 1. La sortie de la porte 90 passe au niveau
logique 0, de sorte que l'entrée S1 du registre à décalage 3 est également au niveau logique 0. Le signal relestage qui passe successivement dans deux portes NON-ET 88
et 89 fonctionnant en inverseur, se retrouve à la sortie
de la porte NON-ET 89 au niveau logique 1, de sorte que
l'entrée So du registre 3 passe également au niveau logique 1.

Le registre 3 se trouve alors en mode de
décalage à droite et il reçoit des signaux d'horloge du
circuit 4 dont la période est de  40,96 s.

17

c) lorsque l'installation se trouve en position de délestage correspondant à une intensité mesurée par le circuit 1 supérieure à l'intensité de fonctionnement du disjoncteur, le signal $\overline{\text{délestage}}$ est au niveau logique O, de sorte que la sortie de la porte 90 est au niveau 1 de même que l'entrée S1 du registre 3. La porte NON-ET 88 est verrouillée par l'état logique O du signal $\overline{\text{délestage}}$ de sorte que la sortie de la porte 89 est forcée à l'état logique O quel que soit le niveau logique du signal relestage.

Le registre à décalage 3 est alors en mode décalage à gauche et le circuit d'horloge 4 applique au registre 3 des signaux dont la période est de 0,64s.

d) en position d'attente, lorsque l'intensité mesurée par le circuit 1 est voisine de l'intensité de fonctionnement du disjoncteur tout en étant inférieure ou égale à celle-ci, le signal $\overline{\text{délestage}}$ fourni par le circuit 1 est de nouveau au niveau logique 1, de sorte que la sortie de la porte 90 est au niveau logique O. Etant donné que le signal relestage est toujours au niveau logique O, la sortie de la porte 89 et par conséquent le signal d'entrée du registre à décalage 3 se trouve au niveau logique O. Le registre se trouve alors en mode bloqué.

Avant de passer à la description du fonctionnement du registre à décalage bidirectionnel 3, qui commande directement les circuits logiques de programmation 7a à 7h, on va décrire la manière dont ce circuit reçoit les signaux d'horloge du circuit 4 du programmateur représenté à la Fig.1.

Si l'on se réfère à la Fig.7, on constate que les signaux de 50 Hz provenant du circuit d'alimentation 10 (Fig.1) étant appliqués au compteur binaire 80 à 14 étages, les signaux obtenus sur les sorties Q4 à Q13 ont des valeurs comprises entre 0,64 s et 327,68 s., la période d'une sortie étant égale au double de la période de la sortie précédente. Lors de la mise sous tension de l'installation, le signal $\overline{RAZ}$ délivré au circuit d'horloge 4 par le circuit 11 (Fig.1) est au niveau logique 0 pendant la charge du condensateur 42 (Fig.3). Ce signal $\overline{RAZ}$ est appliqué à l'une des entrées de la porte 90 du circuit de la Fig.7, de sorte que la sortie de cette porte passe à l'état logique 1, ce qui déverrouille la porte NON-ET 87 qui se comporte alors en inverseur. Le signal à 50 Hz inversé deux fois par l'inverseur 88 et la porte 87 est appliqué à l'entrée d'horloge du registre 3 (Fig.1). Par conséquent, pendant que le signal $\overline{RAZ}$ est à zéro, le registre 3 reçoit des signaux à 50 Hz, ce qui provoque son chargement en parallèle.

Quelques dixièmes de seconde après la mise sous tension, le signal $\overline{RAZ}$ passe au niveau logique 1 et la porte NON-ET 86 du circuit de la Fig.7 se trouve dans un état dans lequel elle se comporte comme une porte NON-ET à deux entrées.

Ainsi qu'on l'a vu précédemment lors de la description du fonctionnement du circuit logique de la Fig.8, lorsqu'il n'y a pas délestage, le signal de sortie de la porte 90 de ce circuit est au niveau 0 et la sortie de la porte NON-ET 82 du circuit d'horloge de la Fig.7 est placé au niveau logique 1. La porte NON-ET 84 qui reçoit ce circuit se comporte comme un inverseur pour le signal reçu sur son autre entrée. Ce signal issu de la sortie Q11 du compteur 80 passe par conséquent par une série de trois inverseurs 83,84 et 85 et il est appliqué à l'entrée de la porte 86 montée en bascule avec la porte NON-ET 87. Lorsqu'un niveau logique 1 apparaît à l'entrée Q11 du compteur 80, un zéro logique est appliqué à l'entrée correspondante de la porte 86 et sa sortie passe au niveau logique 1. La bascule 86, 87 change d'état et effectue d'une part une remise à zéro du compteur 80 et d'autre part une mise au niveau 0 de la sortie d'horloge destinée au registre à décalage 3.

0034971

19

La première impulsion en 50 Hz inversée par l'inverseur 83 remet la bascule 86,87 à son état initial , de sorte que la remise à zéro du compteur 80 disparaît et la sortie d'horloge pour le registre 3 passe au niveau 1.

Ce front montant est pris en compte par le registre 3 qui, ainsi qu'on le verra par la suite effectue un décalage d'un bit. Comme on le verra par la suite lors de la description du fonctionnement du registre à décalage 3, ce cycle se répète toutes les 40,96s. et un 1 logique est alors entré dans le registre qui se décale vers la droite. Lorsqu'un délestage est commandé, le signal de sortie de la porte 90 passe à 1 et déverrouille la porte NON-ET 82 du circuit de la Fig.7. La sortie Q5 du compteur 80 est appliquée à l'entrée de la bascule 86,87 par l'intermédiaire des éléments 82,84 et 85, ce qui déclenche le même cycle que précédemment. La période du signal de sortie de la porte 86,87 passe à 0,64 s. Un 0 est appliqué au registre 3 (Fig.7) à ce rythme, tant que le signal S1 correspondant au délestage est présent sur l'entrée de la porte 82. Un délestage complet peut être effectué en un intervalle de temps maximum de 5,12s.

La sortie Q4 du compteur 80 est utilisée comme signal d'horloge pour piloter le clignotement des voyants de signalisation des circuits 7a à 7h.

On va maintenant se référer à la Fig.4 pour décrire le fonctionnement du registre à décalage bidirectionnel 3.

Les entrées So et S1 de ce registre conditionnent son mode de fonctionnement. L'état de ces entrées est déterminé par le circuit logique 2 (Fig.1) dont le fonctionnement a été décrit plus haut.

Quatre états correspondants aux situations a à d envisagées lors de l'étude de ce circuit logique sont à prendre en considération pour examiner le fonctionnement du registre à décalage.

20

$S_0 = 0$ et $S_1 = 0$

Les deux registres 46 et 47 sont bloqués de sorte qu'aucun changement ne peut intervenir lors de l'application du signal d'horloge.

$S_0 = 1$ et $S_1 = 0$

Le registre est un mode à décalage à droite à chaque front montant du signal d'horloge provenant du circuit d'horloge 4. L'entrée série de droite (DSR) se trouve à la tension d'alimentation, 12 Volts dans le présent exemple. A chaque impulsion d'horloge, c'est donc un 1 logique qui entre dans le registre. Au bout de huit impulsions d'horloge, les huit bits du registre sont à 1 et les sorties 48, 49 ... 55 sont à 1 et commandent un relestage à tous les signaux circuits de programmation 7a à 7h.

$S_0 = 0$ et $S_1 = 1$

Le registre se décale à gauche d'un bit pour chaque front montant du signal d'horloge qui lui est appliqué. L'entrée série de gauche (DSL) est à 0 volt. A chaque impulsions d'horloge c'est donc un 0 qui entre dans le registre. Au bout de huit impulsions d'horloge, les huit bits du registre sont à 0 et les sorties 48, 49 ... 55 sont à 0, et commandent le délestage à tous les circuits logiques de programmation 7a à 7h.

$S_0 = 1$ et $S_1 = 1$

A chaque impulsions d'horloge, le registre recopie l'état logique présent sur les huit entrées parallèles, les quatre premières entrées étant à la tension d'alimentation et les quatre dernières, à 0 volt; les sorties 48 à 51 sont obligatoirement à 1 tandis que les sorties 52 à 55 sont obligatoirement à 0 dans ce mode de fonctionnement.

L'utilisation de ce mode de fonctionnement est faite lors de la mise sous tension de l'installation afin de créer artificiellement un délestage de la moitié des convecteurs commandés par le programmateur.

21

La mise en route des appareils sous le contrôle des sorties 52 à 55 sera assurée progressivement.

Une entrée de remise à zéro des huit bits
du registre est raccordée au commutateur 6 de commande
du mode"Hors-gel". Cette entrée étant prioritaire sur
l'ensemble des fonctions du registre, tant que le commutateur 6 se trouve sur la position"Hors-gel", les huit
bits du registre restent à O.

Les signaux provenant des sorties 48 à 55
du registre à décalage bidirectionnel qui vient d'être
décrit en référence à la Fig.4 parviennent chacun à
l'entrée d'un circuit tampon, tel que le circuit 99 qui
fait partie d'un circuit logique de programmation de
zone tel que le circuit de la Fig.9.

Si le signal d'entrée appliqué au circuit
tampon 99 est un 1, la sortie Q de celui-ci déverrouille
les portes NON-ET 98 et 100. Selon l'état de la bascule
constituée par les portes 91 et 92 d'une part et la position du commutateur 94 des signaux d'horloge de jour ou
de nuit, d'autre part le circuit peut se trouver dans la
position " confort " ou " réduit ".

Si le signal d'entrée du circuit tampon 99
est à O, ce qui correspond à une commande de délestage
ou de mode "Hors-gel" provenant du registre à décalage
bidirectionnel 3, la sortie Q de ce circuit est égale à
O et provoque le verrouillage des portes NON-ET 98 et
100, tandis que sa sortie $\overline{Q}$ est égale à 1 et commande directement le triac 109 et déverrouille la porte NON-ET
104 qui laisse passer les impulsions provenant de la sortie 81 du circuit d'horloge 4 représenté à la Fig.7, et
les transmet à la porte NON-ET 105 et à l'inverseur 106,
pour commander la diode électroluminescente 107 qui se
met à clignoter pour signaler le délestage de la zone
correspondante.

Si l'on en revient au cas où le signal de
sortie du registre à décalage bidirectionnel 3 appliqué

22

au circuit tampon 99 du circuit de la Fig.9 se trouve à l'état 1, alors que le commutateur 93 de ce circuit se trouve dans la position confort ou réduit, la bascule constituée par les portes 91 et 92 est commandée en position "confort" uniquement par la position instable de l'inverseur 93.

Par contre, elle est commandée en position "réduit" par la position stable correspondante de l'inverseur 93 ou bien par le signal provenant de l'horloge de programmation 9 (zone jour ou zone nuit suivant la position du commutateur 94).

La position automatique de l'inverseur à trois positions n'intervient pas sur l'état de la bascule 91, 92. Si l'on place momentanément l'inverseur 93 sur la position "confort", la bascule 91, 92 conserve l'état "confort" pendant un cycle "réduit, confort" de l'horloge de programmation 9.

L'ordre " réduit" suivant de l'horloge de programmation 9 remet la bascule 91, 92 à l'état "réduit" qui ne pourra revenir en position "confort" que du fait de l'application d'une impulsion " confort" ultérieure provoquée par l'actionnement de l'inverseur à trois positions 93.

L'état de la bascule 91, 92 et de l'horloge de programmation 9 est pris en compte par la porte NON-ET 95, dont le signal de sortie est transmis à la porte NON-ET 96 qui reçoit sur son autre entrée une information provenant de l'inverseur à trois positions 93 qui peut être verrouillé en position "réduit" si l'inverseur 93 se trouve en position "réduit". La sortie de la porte NON-ET 96 se trouve à l'état logique 1 lorsque l'interrupteur 93 se trouve en position "réduit" et à l'état logique 0 lorsqu'une impulsion " confort " fait changer d'état à la bascule 91,92.

En position "réduit" de l'inverseur 93, le niveau 0 apparaissant à la sortie de la porte NON-ET 96 ne commande pas le thyristor 103 car il subit une double inversion dans la porte NON-ET 100 et l'inverseur 101. Le thyristor reste donc bloqué. Aucune alternance du secteur n'est appliquée au fil de contrôle du thermostat associé au circuit logique de programmation, de sorte que le thermostat fonctionne en régime " confort ". Les portes NON-ET 97, 98, 105 et l'inverseur 106 provoquent l'allumage de la diode électroluminescente 107 qui émet une lumière fixe signalant que le circuit logique de programmation correspondant se trouve en régime "confort".

L'ensemble constitué par le thyristor 103, le triac 109 et la diode 110, constitue le codeur du signal de commande des thermostats connectés au circuit logique de programmation de zones.

Le circuit de commande " Hors-gel " représenté à la Fig.10 et qui sur la Fig.1 porte le numéro de référence 5 est commandé par le commutateur 6 dont la fermeture provoque l'alimentation du relais 111. La fermeture de ce commutateur provoque l'application au registre à décalage bidirectionnel 3 d'un signal de remise à 0, ce qui provoque la remise à 0 des huit bits de ce registre, et par conséquent l'application de signaux correspondants aux entrées du circuit tampon de tous les circuits logiques de programmation de zone 7a à 7h. L'inverseur 115 du circuit de la Fig.10 transforme ce 0 logique en un 1 logique à sa sortie et déverrouille ainsi la porte NON-ET 116 qui laisse passer le signal d'horloge provenant du circuit logique d'horloge 4 et qui, comme on l'a dit précédemment, présente dans ce cas une période de 0,64 s. Ce signal passe par les deux inverseurs 119 et 120 et fait clignoter la diode électroluminescente 121 indiquant que l'installation a été placée à l'état " Hors-gel ".

Dans cet état, la porte NON-ET 117 est verrouillée par le niveau 0 appliqué à l'une de ses entrées, et le signal provenant du circuit d'horloge 4 ne peut

24

traverser les portes 117 et 118. Il en résulte que la position "Hors-gel " équivaut à un délestage complet de l'installation, le circuit de commande " Hors-gel " interdisant le clignotement des huit voyants de zone.

L'installation qui vient d'être décrite permet d'une part d'assurer une commande cyclique des régimes de fonctionnement de convecteurs électriques auxquels sont associés des thermostats électroniques de manière que leurs cycles de fonctionnement répondent à des impératifs de modification de la température des locaux selon que ceux-ci sont occupés de jour ou de nuit.

Elle permet en outre d'assurer au gré des variations de la consommation d'électricité détectée au niveau du disjoncteur général, une répartition de cette consommation de manière à répondre à certaines priorités, lors de la mise en route, par exemple d'un appareil ménager tel qu'une machine à laver, un lave-vaisselle, un four ou autre , en provoquant un délestage momentané dans l'installation de chauffage par coupure automatique et progressive de l'alimentation des convecteurs dans plusieurs zones, à mesure que la demande en courant provenant d'appareils autres que les convecteurs s'accroît et en évitant ainsi une coupure générale due à une surchage du disjoncteur, sans nuire au confort des locaux chauffés.

Lors de la diminution de la consommation générale au niveau du disjoncteur, cette diminution est détectée et le relestage des zones délestées est commandé progressivement jusqu'au retour aux conditions de fonctionnement normal de l'installation.

Ceci permet, tout en évitant d'augmenter exagérément la capacité des installations d'alimentation du secteur, de répondre à tout instant aux accroissements de charge provoqués par la mise en marche d'appareils électro-ménagers, en n'interrompant l'alimentation de certains convecteurs que pendant les périodes nécessaires au fonctionnement de ces appareils. Par conséquent, le programmateur suivant l'invention permet d'assurer une régulation permanente non seulement de l'installation de chauffage qu'il équipe, mais également de la consommation générale de l'ensemble des équipements se trouvant dans les locaux pourvus d'une telle installation.

Les moyens de commande de délestage et de relestage s'appliquent bien entendu à une installation équipée de convecteurs électriques.

On comprendra cependant que les moyens de programmation des divers régimes de fonctionnement, bien qu'ils soient également décrits comme s'appliquant à des thermostats équipant des convecteurs électriques, peuvent également commander des thermostats équipant des radiateurs d'une autre nature.

Dans la description qui précède, on a envisagé trois régimes de fonctionnement des thermostats, correspondant à trois températures de consigne différentes.

Mais il est aisé d'envisager à l'aide du programmateur de l'invention de commander un nombre d'états de fonctionnement plus important.

Il suffit à cet effet d'une part de disposer de thermostats présentant un plus grand nombre de points de fonctionnement et d'autre part d'adapter la logique du programmateur à ce nombre sans en changer le principe.

Enfin, le programmateur décrit à titre d'exemple est destiné à commander huit zones.

Cependant, rien ne s'oppose à la réalisation d'un programmeur commandant un nombre de zone inférieur ou supérieur à huit.

On donne ci-après à titre d'exemple nullement limitatif, la liste des principaux composants utilisés en vue de la construction du programmateur de l'invention.

## Circuits de mesure de l'intensité

| Composants | | Type | Fabricant |
|---|---|---|---|
| Pont redresseur | 13 | BY 179 | R.T.C. |
| Transistors | 18,19 | BC 557 B | R.T.C. |
| Diodes | 27,34 | BY 206 | R.T.C. |
| Basculeurs | 30,38 | 1/6 HEF 40106 BP | R.T.C. |
| Inverseurs | 32,33,40 | 1/6 HEF 4049BF | R.T.C. |
| LED | 31 | CQY 54 | R.T.C. |
| LED | 39 | CQY 95 | R.T.C. |

## Circuit logique 2 de commande de registre

| Portes | 88,89,90 | HEF4011BP | R.T.C. |
|---|---|---|---|

## Registre à décalage 3

| Registres à quatre bits | 46,47 | HEF 40194 BP | R.T.C. |
|---|---|---|---|

## Circuit d'horloge de relestage, delestage 4

| Compteur | 80 | HEF 4020 BP | R.T.C. |
|---|---|---|---|
| Portes | 82,84,87 | HEF 4011 BP | R.T.C. |
| Porte | 86 | HEF 4023 BP | R.T.C. |
| Inverseurs | 83,85,88 | HEF 4049 BP | R.T.C. |

## Circuit 5 de commande " Hors-gel "

| Portes | 116 à 118 | HEF 4011 BP | R.T.C. |
|---|---|---|---|
| Inverseurs | 115,119,120 | HEF 4049 BP | R.T.C. |

## Circuits logiques 7a à 7h

| Portes NON-ET à deux entrées | HEF 4011 BP | R.T.C. |
|---|---|---|
| Portes NON-ET à trois entrées | HEF 4023 BP | R.T.C. |
| Inverseurs | HEF 4049 BP | R.T.C. |
| Circuit tampon  99 | HEF 4041 BP | R.T.C. |

Circuit d'horloge 9

| Composants | | Type | Fabricant |
|---|---|---|---|
| Horloge | 70 | Horloge à Quartz | |

Alimentation 10

| Pont redresseur | 57 | BY 179 | R.T.C. |
|---|---|---|---|
| Diode | 62 | 1 N 4148 | R.T.C. |
| Zener | 65 | BZX 61C11 | R.T.C. |
| Basculeur | 66 | 1/6 HEF 40106 BP | R.T.C. |
| Regulateur de tension | | UA 7812 | R.T.C. |

Circuit 11 de remise à zéro

| Bascule de Schmitt 44 | HEF 4093 BP | R.T.C. |
|---|---|---|

Dans le dispositif de programmation, la commande " Hors-gel " est assurée par un interrupteur séparé, commandé par un relais. On comprendra cependant que cette commande peut également être programmée, soit à partir de l'horloge à cycle prédéterminé du dispositif, soit à partir d'une horloge indépendante.

28
REVENDICATIONS

1. Dispositif de programmation à distance d'une installation de chauffage comprenant des radiateurs auxquels sont associés des thermostats à commande automatique de la température de consigne, caractérisé en ce qu'il comporte une horloge (9) à cycle prédéterminé destinée à émettre des signaux de commande à au moins deux régimes de fonctionnement des thermostats pendant dès intervalles de temps prédéterminés dudit cycle et au moins un circuit logique (7a à 7h) de programmation de la température de fonctionnement des thermostats en fonction de l'évolution des signaux de commande délivrés par ladite horloge (9).

2. Dispositif de programmation suivant la revendication 1, caractérisé en ce que ledit circuit logique de programmation comprend des moyens (94) de commutation en vue de la sélection des signaux de commande de fonctionnement qui lui sont appliqués par ladite horloge (9), des moyens (91,92,93) de sélection d'un mode de fonctionnement des thermostats à commander par ledit circuit logique, des moyens (95,96,97,98,100,101,102) de combinaison des signaux provenant desdits moyens de commutation (94) et desdits moyens de sélection (91,92,93) et des moyens (103) de commande des thermostats en fonction des signaux qui leur sont appliqués par lesdits moyens de combinaison.

3. Dispositif de programmation suivant l'une quelconque des revendications 1 et 2, caractérisé en ce que ladite horloge (9) délivrant des signaux de commande aux régimes de fonctionnement de jour et de nuit, lesdits moyens de commutation sont constitués par un commutateur à deux positions (94) connecté à des sorties correspondantes de ladite horloge (9), et en ce que lesdits moyens de sélection de mode de fonctionnement comprennent un inverseur (93) à trois positions associé à un circuit basculeur (91,92) dont le niveau logique de sortie correspondant au mode de fonctionnement choisi est conditionné par la position dudit basculeur, la sortie dudit basculeur étant con-

29

nectéeà l'entrée d'une porte (95) qui fait partie desdits moyens de combinaison et dont l'autre entrée est connecté audit commutateur à deux positions (94).

4. Dispositif suivant l'une quelconque des revendications 1 à 3, caractérisé en ce que lesdits thermostats à commander étant répartis dans plusieurs zones dont les régimes et les modes de chauffage au cours d'un cycle de l'horloge sont différents, il comporte autant de circuits logiques de programmation (7a à 7h) qu'il y a de zones.

5. Dispositif suivant l'une quelconque des revendications 1 à 4, destiné à commander le fonctionnement de thermostats associés à des convecteurs électriques, dont l'alimentation est contrôlée par le disjoncteur général de l'installation électrique des locaux à chauffer, caractérisé en ce qu'il comporte en outre un circuit (1) de mesure de l'intensité consommée par l'ensemble de l'installation électrique et de génération de signaux de commande de délestage lorsque l'intensité consommée par l'installation augmente au-delà d'un premier seuil prédéterminé et de signaux de commande de relestage lorsque l'intensité consommée diminue au-dessous d'un second seuil prédéterminé et des moyens (2,3,4) pour appliquer successivement auxdits circuits logiques de programmation (7a à 7h) des signaux de délestage ou de relestage selon la valeur de l'intensité consommée par l'ensemble de l'installation.

6. Dispositif de programmation suivant la revendication 5, caractérisé en ce qu'il comporte en outre des moyens (18a, 22a) commandés à distance de modification d'au moins un seuil de fonctionnement de l'installation.

7. Dispositif de programmation suivant la revendication 5, caractérisé en ce que lesdits moyens d'application successive de signaux de délestage ou de relestage auxdits circuits logiques de programmation

30

(7a à 7h) comprennent un registre à décalage bidirectionnel comprenant autant d'étages qu'il y a de circuits logiques de programmation (7a à 7h) à commander les sorties desdits étages étant respectivement reliées à des entrées correspondantes desdits circuits logiques de programmation (7a à 7h), ledit registre (3) étant connecté à un circuit d'horloge de relestage et de délestage (4) et à un circuit logique (2) de commande dudit registre interposé entre celui-ci et ledit circuit (1) de mesure d'intensité.

8. Dispositif de programmation suivant l'une quelconque des revendications 5 à 7 , caractérisé en ce qu'il comporte en outre un circuit (11) de commande de remise à zéro d'une partie au moins des étages dudit registre à décalage (3) en vue de provoquer lors de la mise sous tension de l'installation, le délestage des convecteurs commandés par les circuits logiques de programmation (7a à 7h) connectés aux étages dudit registre (3) associés audit circuit de remise à zéro.

9. Dispositif de programmation suivant l'une quelconque des revendications 5 à 8 , caractérisé en ce qu'il comporte en outre un circuit (5) d'inhibition de tous les circuits logiques de programmation (7a à 7h) en vue d'assurer le réglage des thermostats à une température de fonctionnement minimale.

10. Dispositif de programmation suivant l'une quelconque des revendications 5 à 9, caractérisé en ce que ledit registre à décalage bidirectionnel (3) est constitué par deux registres à décalage ayant un nombre égal d'étages (46,47) dont deux entrées communes (So, S1) sont respectivement connectées à des sorties correspondantes du circuit logique (2) de commande de registre et dont les entrées d'horloge sont connectées à la sortie dudit circuit d'horloge de relestage et de délestage (4), celui-ci comportant un compteur binaire (80) connecté à un circuit (10) d'alimentation et de mise en forme de signaux à la fréquence du secteur, ledit compteur (80) étant associé
à des moyens (82 à 86) pour engendrer des signaux d'horloge de fréquencesdifférentes selon que le registre à décalage bidirectionnel (3) se trouve à l'état de décalage à
gauche en vue de commander le délestage ou à l'état de décalage à droite en vue de commander le relestage, lesdits
registres (46,47) comportant enfin des entrées de remise
à zéro connectées audit circuit d'inhibition (5).

11 . Dispositif de programmation suivant l'une
quelconque des revendications 5 à 10, caractérisé en ce
que chacun desdits circuits logiques de programmation comporte en outre un circuit tampon (99) dont l'entrée est connectée à la sortie de l'étage correspondant
dudit registre à décalage bidirectionnel (3), ledit circuit tampon comportant une première sortie (Q) d'autorisation du passage des signaux des moyens de combinaisons
(95,96,97,98,100,101, 102) vers lesdits moyens (103) de
commande des thermostats correspondants dans un premier
mode de fonctionnement,constitués par un redresseur commandé laissant passer une première alternance du secteur
d'alimentation et une seconde sortie (Q̄) connectée à des
moyens (109,110) de commande du fonctionnement desdits
thermostats dans un second mode de fonctionnement, constitués par des moyens redresseurs commandés, laissant passer la seconde alternance du secteur d'alimentation.

## FIG_1

FIG. 2a

FIG. 2

2/5

0034971

## FIG_3

+V

42

43    45    44    → $\overline{RAZ}$

## FIG_4

HORLOGE 4 →

+V    +V

46    47

So
S1

48  49  50  51        52  53  54  55

HORS-GEL 5 →

## FIG_5

56    57    62    63    66    67 → 50Hz

64    65

58    59    60    61 → +V= 12v

## FIG.6

NUIT

JOUR

vers 7ª à 7ʰ          +V          vers 7ª à 7ʰ

## FIG.7

50 Hz

RAZ

S₁

vers 3

## FIG.8

RAZ

RELESTAGE

DELESTAGE

S₀

S₁

# FIG.9

COMMANDE THERMOSTATS

HORLOGE

94 95 96 97 98 100 101 102 103 104 105 106 107 108 109 110

91 92 93

REGISTRE3

99

# FIG.10

+V

CP REGISTRE 3

113 111 114 118 115 116 119 120 121

112 117

vers 7ᵃ à 7ʰ

Q₄ COMPTEUR 80

5/5

0034971

Office européen
des brevets

**RAPPORT DE RECHERCHE EUROPEENNE**

Numéro de la demande

EP 81 40 0223

| | **DOCUMENTS CONSIDERES COMME PERTINENTS** | | **CLASSEMENT DE LA DEMANDE** (Int. Cl.³) |
|---|---|---|---|
| Catégorie | Citation du document avec indication, en cas de besoin, des parties pertinentes | Revendica-tion concernée | |
| | FR - A - 2 263 552 (E.D.F.)<br><br>  * Page 1, lignes 1-14; page 3, ligne 35 - page 4, ligne 11; page 5, ligne 8 - page 6, ligne 30; page 7, lignes 14-25; page 8, ligne 30 - page 10, ligne 8, figures 1,2,7 *<br><br>-- | 1-3 | G 05 D 23/19 |
| | FR - A - 2 395 671 (MECELEC)<br><br>  * Page 2, ligne 35 - page 4, ligne 25; figure *<br><br>-- | 1-4 | **DOMAINES TECHNIQUES RECHERCHES** (Int. Cl.³) |
| | IBM TECHNICAL DISCLOSURE BULLETIN, vol. 22, no. 4, septembre 1979, New York, US<br>R.A. WARFIELD: "Energy management system" pages 1353-1356<br><br>  * Page 1353, ligne 1 - page 1355, ligne 5; figure *<br><br>-- | 1 | G 05 D 23/19<br>F 24 D 19/10<br>H 02 J 3/14<br>G 05 D 23/20<br>G 05 D 23/24<br>G 05 D 23/275 |
| | US - A - 4 090 062 (A. PHILIPS et al.)<br><br>  * Colonne 8, lignes 1-64; co-lonne 12, lignes 25-57; co-lonne 13, ligne 64 - colonne 14, ligne 35; colonne 18, ligne 24 - colonne 19, ligne 7; figures 4,5 *<br><br>-- | 5 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention |
| | DE - A - 2 404 234 (LICENTIA PA-TENTVERWALTUNG)<br><br>  * Page 4, ligne 1 - page 5, ligne 5, figures 1,2,3 *<br><br>--                      ./. | 1 | E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 01-06-1981 | V. HELOT |

OEB Form 1503.1   06.78

**0034971**

Numéro de la demande

**Office européen RAPPORT DE RECHERCHE EUROPEENNE**

**des brevets**

EP 81 40 0223

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | BE - A - 841 601 (MARQ ELECTRO-NIQUE) <br> * Page 4, ligne 16 - page 5, ligne 28; figure 1 * <br> -- | 1 | |
| A | DE - A - 2 530 855 (H. DINKEL) <br> * Page 3, ligne 18 - page 4, ligne 22; figure 1 * <br> ---- | | DOMAINES TECHNIQUES RECHERCHES (Int. Cl. 3) |

OEB Form 1503.2  06.78